# EUROPEAN PATENT SPECIFICATION

(11) **EP 4 644 221 B1**
(45) Date of publication and mention of the grant of the patent: **17.06.2026**
(21) Application number: 24382472.9
(22) Date of filing: 30.04.2024
(51) Int. Cl.: B62K 25/08, B62K 25/28

(54) **SHIFTER FOR CONTROLLING THE FRONT AND REAR SHOCK ABSORBERS OF A BICYCLE USING A SINGLE LEVER**
SCHALTUNG ZUR STEUERUNG DER VORDEREN UND HINTEREN STOSSDÄMPFER EINES FAHRRADS MIT EINEM EINZIGEN HEBEL
MANETTE POUR COMMANDER LES AMORTISSEURS AVANT ET ARRIÈRE D'UNE BICYCLETTE À L'AIDE D'UN SEUL LEVIER

(43) Date of publication of application: 05.11.2025
(73) Proprietor: ORBEA, S. COOP., 48269 Mallabia (BIZKAIA) (ES)
(72) Inventor: PRIETO NÚÑEZ, Sergio, 20230 Legazpi, Gipuzkoa (ES)
(74) Representative: Cueto, Sénida

(56) References cited:
- US-A1- 2019 315 428
- US-B2- 8 998 231
- JAKE BROOKES BIKING: "The Scott Genius Twinloc System", 25 March 2022 (2022-03-25), XP093207814, Retrieved from the Internet <URL:https://www.youtube.com/watch?v=jjQQWQST7JM>

## Description

### Object of the invention

The present invention belongs to the field of bicycles, and more particularly to the control mechanisms for the shock absorbing systems of a bicycle.

The present invention is directed to a shifter designed for the cyclist to simultaneously control the front shock absorber and the rear shock absorber without getting off the bicycle by means of a single lever.

### State of the art

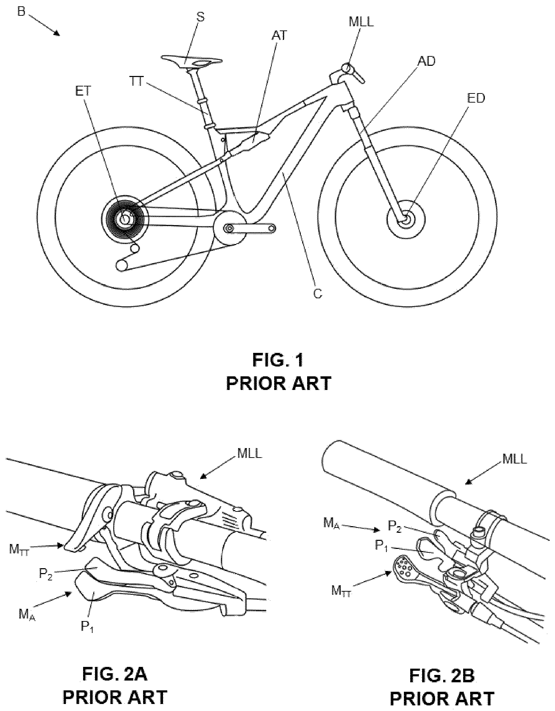

Most bicycles in the market comprise a front shock absorbing system and a front shock absorbing system. Fig. 1 shows a view of a bicycle (B) showing these features. A further example of a control mechanism for the shock absorbers of a bicycle is disclosed in publication from Jake Brookes Biking: "The Scott Genius Twinloc System" (https://www.youtube.com/watch?v=jjQQWQST7JM) which discloses a shifter for controlling the front and rear shock absorbers of a bicycle comprising: a main body configured for fixation to the handlebar of the bicycle; and a first lever unit connected in a rotating manner to the main body, where the first lever unit comprises first fixation means for two cables configured for connection respectively to the front shock absorber and the rear shock absorber of the bicycle, such that, when the main body is fixed to the handlebar and the cables connected to the front and rear shock absorbers are fixed to the first fixation means, the rotation of the first lever unit causes a traction onto said cables that simultaneously modifies the configuration of the front shock absorber and the rear shock absorber of the bicycle, where the connection between the first lever unit and the main body is configured such that said first lever unit, upon receiving a first pulsation by the cyclist, rotates in a first direction from a first position to a second position that is angularly separated from the first position, and upon receiving a second pulsation from the cyclist said first lever unit rotates in the first direction from the second position to a third position that is angularly separated from the second position.

The rear shock absorbing system comprises a rocking mechanism connecting the rear axle (ET) of the bicycle (B) with the frame (C) by means of a normally pneumatic or hydraulic shock absorber referred to as *"rear shock absorber"* (AT). The rear rock absorber (AT) can be regulated to adapt the hardness of the rear shock absorbing system to the conditions of the track.

The front shock absorbing system is formed by a shock absorber in the form of a suspension fork connecting the front axle (ED) of the bicycle (B) with the frame (C). In a similar manner as above, the front shock absorber (AD) can be regulated to adapt the hardness of the front shock absorbing system to the conditions of the track.

Both the rear shock absorber (AT) and the front shock absorber (AD) are regulated by means of respective regulation elements provided as an adjustment dial or knob that, upon being rotated, modify the position of a valve regulating the capacity of the fluid withing the shock absorber to move from one side of the cylinder to the other. The angular displacement of the adjustment know from the open position (soft shock absorption) to the closed position (hard shock absorption) is variable, although it is usually around 180°.

Some shifters (M_{A}) are installed in the handlebar (MLL) of the bicycle (B) for allowing the cyclist to regulate the rear shock absorber (AT) and the front shock absorber (AD). In most cases, these shifters (M_{A}) actuate simultaneously the rear (AT) and front (AD) absorbers, thereby allowing the cyclist to modify the hardness level of both at the same time without letting go of the handlebar (MLL) or getting off the bicycle (B). In general, these shifters (M_{A}) have two separate levers.

A first lever (P₁) allows for applying traction to two cables mechanically connected to the respective adjustment knobs of both the rear (AT) and the front (AD) shock absorbers. Each pulsation of the first lever (P1) causes the rear (AT) and front (AD) absorbers to pass from a position to another, the mechanism becoming locked upon arriving at the last position.

A second lever (P₂) actuates the cited locking mechanism to unlock the first lever (P₁). Once unlocked, the first lever (P₁) returns to the first position by itself.

Thus, depending on the position of the first lever (P₁), the different traction applied on the respective adjustment knobs causes them to rotated a predetermined angle, such that both shock absorbers adopt an open/unblocked position (soft shock absorption), a closed/blocked position (hard shock absorption), or one or several intermediate positions (intermediate shock absorption). Figs. 2A and 2B shows two examples of shifters (M_{A}) of this type which, as shown, have the two cited levers (P1, P2).

Many bicycles (B) also have an element referred to as *"telescopic seatpost"* (TT). The telescopic seatpost (TT) allows for the modification of the height of the seat (S) while cycling just by actuating a dedicated lever (M_{TT}) usually provided at the handlebar (MLL). Again, this lever (M_{TT}) is designed to apply traction to a cable mechanically connected to the telescopic seatpost (TT) mechanism. Thus, when the lever (M_{TT}) is actuated, the telescopic seatpost (TT) is unblocked, and thus it is possible to alternate between a low position, a high position, and an intermediate position between the above two positions.

In bicycles having all of these elements, a plurality of levers accumulates at an area of the handlebar in addition to those usually employed to control the shifts and the brakes. This accumulation is not only anti-aesthetical, but it is also not ergonomic and frequently implies that, to push one of the levers, the cyclist needs to change the position of the hand holding the handlebar. An additional drawback is the additional weight these levers add to the bicycle.

In view of all of the above, there exist in this field the need for more ergonomic systems for controlling the shock absorbing systems of the bicycle which, at the same time, are also less bulky and heavy.

### Brief disclosure of the invention

The inventors of the present invention have solved the abovementioned drawbacks by means of a new shifter allowing for both shock absorbers to be simultaneously controlled using a single lever. That is, a new mechanism is designed which does not require an additional unlocking lever, but which can be unlocked by an additional pulsation of the same lever used to shift from one position to another.

The main advantage is an important improvement in ergonomics in comparison with the conventional systems requiring two levers since, by reducing the volume, the shifter can be installed in a more comfortable position. Reducing from two levers to a single lever is also advantageous in that the weight of the assembly is reduced.

Now, the object of the invention is disclosed in greater detail.

### Shifter for controlling the front and rear shock absorbers

The shifter of the present invention mainly comprises a main body and a first lever unit. The main body is configured to be fixed to the handlebar of a bicycle, for example, by means of any conventional manner using a clamp or the like. In turn, the first lever unit is rotatively connected to the main body. The first lever unit further comprises first fixation means for two cables configured for connection respectively to the front shock absorber and the rear shock absorber of the bicycle. These first fixation means may have any suitable configuration, although they preferably comprise simply orifices.

When the main body is fixed to the handlebar and the cables connected to the front and rear shock absorbers of the bicycle are fixed to the first fixation means, a rotation of the first lever unit causes a traction from said cables that simultaneously modifies the configuration of the front shock absorber and the rear shock absorber of the bicycle.

The connection between the first lever unit and the main body is additionally configured such that said first lever unit, upon receiving a first pulsation from the cyclist, rotates in a first direction from a first position to a second position that is angularly separated from the first position. Next, upon receiving a second pulsation from the cyclist, the first lever unit rotates in the same first direction from the second position to a third position that is angularly separated from the second position.

That is, in a particular angular position making up the first position, the control element of both shock absorbers is in an open position, that is, both shock absorbers are in the soft configuration. Then, a first rotation action when the cyclist pushes the first lever unit in the first direction causes said first lever unit to angularly advance in said first direction towards the second position. This first angular advancement causes a traction from both cables that modifies the position of the control element of bock shock absorbers, which then pass to an intermediate position corresponding to a shock absorption of intermediate hardness.

Next, a second rotation action when the cyclist pushes again in the first direction causes the first lever unit to angularly advance further until arriving at the third position. This second angular advancement of the first lever unit increases the traction on both cables, which still actuate the control element of the shock absorbers to make them pass to a closed configuration, that is, hard shock absorption. Naturally, the angular amplitude separating the positions of the first lever unit from the others may vary depending on known geometrical reasons and on the configuration of the control element of the shock absorbers.

In a conventional shifter, to cause the lever to move from the third position back to the first position, a second unlocking lever is needed. The main reason is avoiding an additional pull action from the cables connected to the shock absorbers when the control elements are already in the hard position, since that may cause them damage. However, the shifter of the present invention differs therefrom in that a new pulsation by the cyclist in the same direction as the previous two is enough for causing the first lever unit to return to the first position without any additional pull of the cables.

Indeed, in the present invention the connection between the first lever unit and the main body are configured such that said first lever unit, upon receiving a third pulsation from the cyclist, rotates in the first direction from the third position to an unlocking position and, then, it automatically rotates in a second direction opposite the first to return from said unlocking position back to the first position.

That is, the first, second and third positions are stable positions corresponding to the three possible configurations of the shock absorbers. Passing from the first to the second, and from the second to the third, is carried out by the application of respective pulsations on the first lever unit by the cyclist, for example, using the thumb. Thus, when the lever unit is in any of the first to third positions, it remains in that position indefinitely and it only leaves said position when the cyclist actuates the first lever unit. In the present invention, returning from the third position to the first position does not require the actuation of an additional unlocking lever, but the cyclist needs only apply an additional pulsation on the first lever unit in the same direction as the previous ones until arriving at a position referred to herein as *"unlocking position".* Once in the unlocking position, the traction of the cables connected to the shock absorbers causes the first lever unit to return to the first position.

In this context, it is of the utmost importance that the mechanism is designed such that rotation of the first lever unit from the third position towards the unlocking position is carried out without an additional traction from the cables connected to the shock absorbers. As mentioned earlier, an additional pull from these cables when they are already at their displacement limit (that is, in their position corresponding to a hard absorption) could, in the long run, cause damage to the shock absorbers. Thus, as disclosed in greater detail further down in the present document, the first lever unit is formed by a lever body and a floating pulley to which the cables are connected, both elements being connected in such a manner that they can rotate one with respect to the other. When the cyclist pushes the lever body to cause the shifter to move from the third position to the unlocking position, the designed mechanism prevents rotation of the floating pulley, such that the cables connected to the shock absorbers are not pulled from. The rotation of the floating pulley can be prevented by means of a stop provided in the main body. However, the lever body does rotate, thereby causing the first lever unit as a whole to pass to the unlocking position. From there, the traction of the cables causes the first laver unit back to the first position. During the first phase of this trajectory, the floating pulley returns to its initial position with respect to the lever body.

In short, thanks to this configuration only a single lever is needed to completely control the front and rear shock absorbers. Further, to move from a position to another the cyclist always pushes in the same direction. An improvement in comfort and ergonomics with respect to prior art systems is obvious.

The working principles disclosed in the previous paragraphs may be obtained using different mechanisms. However, according to a particularly preferred embodiment of the invention, the mechanism is configured as follows.

On one hand, the shifter comprises a swinging arm having a first end fixed in a rotating manner to the main body and continuously biased by a first helical spring. For example, the swinging arm may be provided according to an essentially tangential orientation with respect to the centre of rotation of the lever unit with respect to the main body. In that case, the first helical spring pushes the swinging arm such that its free end tends to move with respect to the main body in an essentially radial direction, whether towards the exterior (that is, moving away from the cited centre of rotation) or towards the interior (that is, moving closer to said centre of rotation). Specifically, in this example a configuration is disclosed where the direction is essentially radial towards the exterior. Further, as disclosed in greater detail below, at the second end of the swinging arm, that is, its free end, there is a locking pin.

On the other hand, the first lever unit comprises a closed track in which the locking lever of the second end of the swinging arm cited in the previous paragraph is introduced. In this context, the term *"closed"* means that the track has the shape of a closed curve in the sense that, upon moving along said curve, one eventually arrives at the initial position in a univocal manner. Thus, the locking pin is designed to remain inside the closed track at all times, moving along said track in a predetermined direction as the first lever unit sequentially moves from each position to the next.

More specifically, the closed track has three stable locations corresponding respectively to the first, second and third positions of the first lever unit, and an unlocking location situated between the third stable location and the first stable location that corresponds to the unlocking position of the first lever unit. The locations of the closed track are stable because, when the locking pin is in said positions, the direction of the force exerted by the swinging arm is not suitable to take it out of said position. As disclosed below, this can be achieved by providing the closed track with suitably configured direction changes. In any case, when the locking pin is in one of said positions, only a force applied by the cyclist on the first lever unit can bring it out of said position.

Naturally, the stable locations of the locking pin correspond to the positions of the first lever unit. Thus, in the first position of the lever unit the locking pin is in the first stable location, in the second position of the lever unit the locking pin is in the second stable location, and in the third position of the lever unit the locking pin is in the third stable location. Finally, in the unlocking position of the lever unit the locking pin is in the unlocking location, from which the traction exerted by the cables connected to the front and rear shock absorbers causes the lever unit to return to the first position and, correspondingly, the locking pin returns to the first stable location.

Although the closed track can be configured in a number of manners to achieve the disclosed operation, in a particularly preferred embodiment of the invention the closed track comprises a radially inner section and a radially outer section. The radially inner section has a zigzag configuration having two curves where the second stable location and the third stable location are provided, and the radially outer section has a configuration with a substantially uniform curvature. The first stable location is thus provided at a first connection point between both sections of the closed track and the unlocking location is provided at a second connection point between both sections.

To ensure stability of the first location positioned at the first point of connection between both sections of the closed track, a bottom of the closed track comprises a step placed at said first connection point. In turn, the locking pin is connected to the swinging arm in an axially sliding manner and, further, it is continuously biased towards the bottom of the closed track. Thanks to this configuration, the locking pin is ensured to move along the closed track always in contact with the bottom thereof. Thus, the step prevents the locking pin, when in the first stable location, to pass through the radially outer section towards the third stable location. For this reason, the first lever unit cannot move from the first position to the third position without passing along the radially inner section through the second and third positions.

In short, with this configuration of the closed track, the swinging arm and the locking pin ensure that the passage of the first lever unit from one position to another takes place according to a predetermined sequence where the locking pin moves along the closed track always in the same direction. This configuration is advantageous in that the cyclist needs only to actuate the first lever unit from the first to the third positions in the same direction. To return to the first position, only an additional force in the same direction is needed to cause the locking pin to move towards the unlocking position, whereby the traction exerted by the cables connected to the shock absorbers pulls in the opposite direction to cause the first lever unit to return to the first position.

According to yet another preferred embodiment, the first lever unit comprises a lever body and a floating pulley connected in a rotative manner through a second helical spring. The first cable fixation means disclosed above are provided in the floating pulley. Further, the floating pulley comprises a first protrusion that abuts against the main body when the first lever unit is in the third position corresponding to a situation where the locking pin is in the third location of the closed track.

Thanks to this configuration, when the first lever unit leaves the third position towards the unlocking position, the first protrusion prevents the floating pulley from rotating with respect to the main body. However, the lever body rotates with respect to said floating pulley, overcoming the force of the second helical spring. Thus, the locking pin passes from the third location to the unlocking location and, thanks to the traction of the cables connected to the front and rear shock absorbers, moves along the outer section of the closed track until arriving at the first stable location.

This mechanism is advantageous because it prevents an additional traction on the cables connected to the shock absorbers during the unlocking process. That is, the lever body rotates with respect to the main body, causing the locking pin to move from the third stable location to the unlocking location. However, the floating pulley does not rotate, since its rotation capability further than the third position is blocked by the first protrusion. Since the floating pulley does not rotate, not additional traction is applied on the cables during this process, thereby preventing damage.

In principle, the first protrusion may be placed in any position of the floating pulley provided it can carry out the function disclosed above. However, according to a particularly preferred embodiment, the first protrusion is placed in a first portion of a cylindrical outer surface of the floating pulley, such that said protrusion abuts against a cylindrical section of the main body.

In another preferred embodiment of the invention, a second portion of a cylindrical outer surface of the floating pulley comprises a radial shoulder configured to cooperate with a stop element of the lever body with the purpose of limiting the angular amplitude of the rotation of the lever body with respect to said floating pulley.

The shifter disclosed until this point only includes a first lever unit designed to control simultaneously the shock absorbers of both the front and rear axle of the bicycle. However, in a particularly preferred embodiment of the invention, the shifter may comprise additionally a second lever unit connected in a rotative manner to the main body. This second sever unit comprises a second fixation means for a cable configured for connection to a telescopic seatpost, for example, an orifice made in the second lever unit. Thus, when the shifter is installed in the bicycle with a cable connected between the orifice of the second lever unit and the regulation element of the telescopic seatpost, rotation of this second lever unit allows for unlocking the telescopic seatpost.

In a particularly preferred embodiment, an outer cylindrical surface of the second lever unit comprises a second and third protrusions configured for, in cooperation with the cylindrical stop of the main body, limit the angular amplitude of the rotation of the second lever unit with respect to said main body.

### Control system formed by the shifter and the shock absorbers

The invention is further directed to a system for simultaneously controlling the front shock absorber and the rear shock absorber of a bicycle. This system further comprises the following elements:
- A shifter such as the one disclosed in the above paragraphs, whose main body is fixed to the handlebar of the bicycle.
- A front shock absorber connecting a front axle of the bicycle with the frame.
- A rear shock absorber connecting a rear axle of the bicycle with the frame.
- Two cables having an end connected to the first fixation means of the shifter and another end respectively joined to a control element of the front shock absorber and the rear shock absorber.

Preferably, the above-mentioned system further comprises another cable having an end connected to the second fixation means of the second lever unit of the shifter and another end joined to a control element of the telescopic seatpost. Thus, rotation of the second lever unit with respect to the main body of the shifter causes a traction on said cable that actuates said control element to modify the height of the telescopic seatpost.

### Bicycle comprising the control system

The present invention is also directed to a bicycle having a control system according to the disclosure in the previous paragraphs.

### Brief description of the figures

The details of the invention are shown in the accompanying figures, which are not to be interpreted as limiting the scope of the invention:
Fig. 1 shows a schematic view of a bicycle having a conventional double suspension.
Figs. 2a and 2b show respective configurations of conventional shifters for controlling the front and rear shock absorbers and the telescopic seatpost of a bicycle.
Fig. 3 shows an exploded view of a shifter according to the present invention.
Fig. 4 shows an exploded view of the first lever unit of a shifter according to the present invention.
Fig. 5 shows a detailed view of the first lever unit in a mounted state where the closed track is visible.
Fig. 6 shows another perspective view of the shifter of the present invention.
Fig. 7 shows still another perspective view of the shifter of the present invention.
Figs. 8A-8C show several views of the shifter of the invention when in the first position, where the main body is eliminated in Figs. 8B and 8C.
Figs. 9A-9C show several views of the shifter of the invention when in the second position, where the main body is eliminated in Figs. 8B and 8C.
Figs. 10A-10C show several views of the shifter of the invention when in the third position, where the main body is eliminated in Figs. 8B and 8C.
Figs. 11A-11C show several views of the shifter of the invention when in the unlocking position, where the main body is eliminated in Figs. 8B and 8C.

### Detailed description of the invention

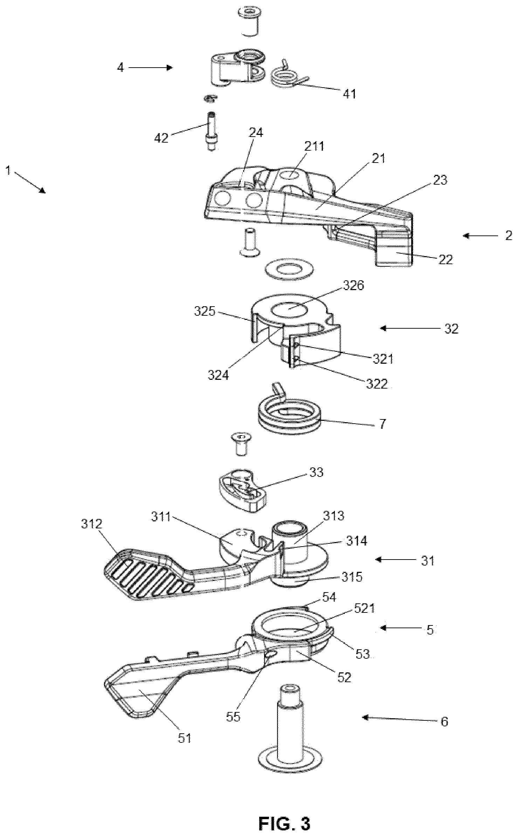

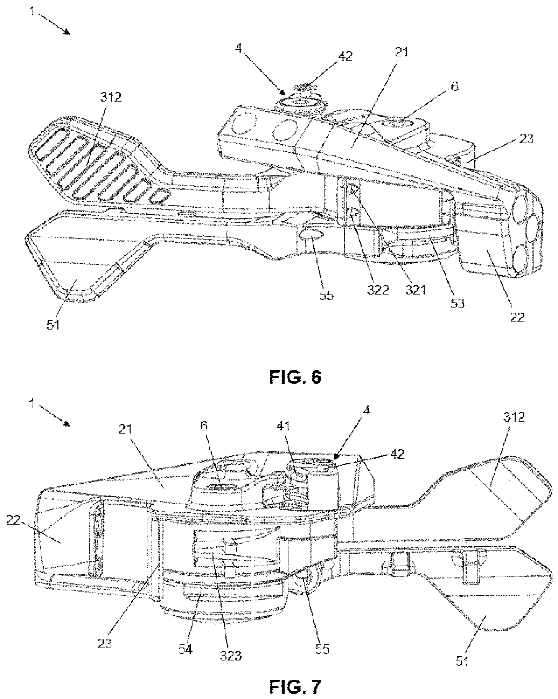

An exemplary shifter (1) according to the invention is disclosed with reference to Figs. 3-11.

In this example, the shifter (1) has both a first lever unit (3) for controlling the hardness of the front (AD) and rear (AT) shock absorbers and a second lever unit (5) for controlling the telescopic seatpost (TT). Thus, the shifter (1) shown in these figures allows for controlling three elements using only two lever units (3, 5), whereby a reduction in shifter (1) size is achieved that improves ergonomics for the cyclist.

### 1. Description of the shifter of the invention

Now, the main components of the shifter (1) are disclosed in detail.

### First lever unit

As mentioned, the first lever unit (3) controls the configuration of the front (AD) and rear (AT) shock absorbers. Thereto, the first lever unit (3) is formed by two parts concentrically connected one to the other in a rotative manner: lever body (31) and floating pulley (32). As shown in the figures, the lever body (31) has a central portion (311) from which a lever (312) emerges in an essentially radial direction. At the centre of the central portion (311) there is a first cylindrical projection (313). On the other hand, the floating pulley (32) has an approximately circular shape having a central cavity (326) in which the first cylindrical projection (313) emerging from the central portion (311) of the lever body (31) fits. Both elements are thereby coupled in a rotating manner.

The floating pulley (31) has, in a radially outer portion, two fixation means (321, 322), in this case simply two orifices, designed for the fixation of an end of the two cables controlling the configuration of the front (AD) and rear (AT) shock absorbers. That is, each of the cables has an end joined to the adjustment knob of the relevant shock absorber (AD, AT), runs along the frame of the bicycle guided by conventional means, and has an opposite end joined to one of these two fixation means (321, 322). Therefore, when the first lever unit (3) rotates, and therefore also the floating pulley (32), a traction is applied to the cables that causes the rotation of the adjustment knob of the shock absorbers (AD, AT), thereby causing them to alternate selectively between soft, hard, or intermediate shock absorbing.

However, the rotation capability of a part with respect to the other is limited by several elements disclosed below.

The floating pulley (32) has, in a portion of its cylindrical outer surface, two radial shoulders (324, 325) where the radius of said surface is reduced, thereby forming between them a recessed radial arc. In this specific example, the radial shoulders (324, 325) are limited to an area near an upper surface of the floating pulley (32), the rest of said section of cylindrical wall being cut out. In turn, the lever body (31) has, at a connection area between the central portion (311) and the lever (312), a stop element (314) that protrudes radially inwards. This stop element (314) cooperates with the radial shoulder (324) to limit the angular displacement of the rotation of the floating pulley (32) with respect to the lever body (31).

Further, the rotative connection between the lever body (31) and the floating pulley (32) includes a second helical spring (7) continuously biasing the rotation of one with respect to the other. Therefore, without any additional external force surpassing the spring preload, the floating pulley (32) will remain in a position where the radial shoulder (324) abuts against the stop element (314) of the lever body (31).

Further, the floating pulley (32) has, at its outer surface, a radial protrusion (323) configured to cooperate with a cylindrical stop (23) of the main body (2), as disclosed in detail further below.

The first lever unit (3) further comprises a closed track (33) provided at the central portion (311) of the lever body (31), in a radially external position with respect to the floating pulley (32). In this example, the closed track (33) is machined in a separate part from the lever body (31) that is firmly fixed thereto by means of a screw (T). However, the closed track (33) could alternatively be machined in any suitable manner onto the lever body (31).

The closed track (33) is recessed with respect to the upper surface of the separate part where it is provided, said surface being essentially at the same level as an upper surface (according to the orientation of the figures) of the floating pulley (32). The closed track (33) is formed by two separate sections: an inner section (33i) and an outer section (33e). Both sections are oriented essentially in a radial direction, that is, approximately in perpendicular to the longitudinal axis of the cylindrical projection (313) and the central cavity (326) respectively of the lever body (31) and the floating pulley (32). The outer section (33e) has a slightly arched shape lacking sharp direction changes. The inner section (33i), on the contrary, comprises two sharp curves forming, at the lateral wall farthest from the floating pulley (32), two cavities. The connection points between the outer section (33e) and the inner section (33i) also comprise respective sharp curves.

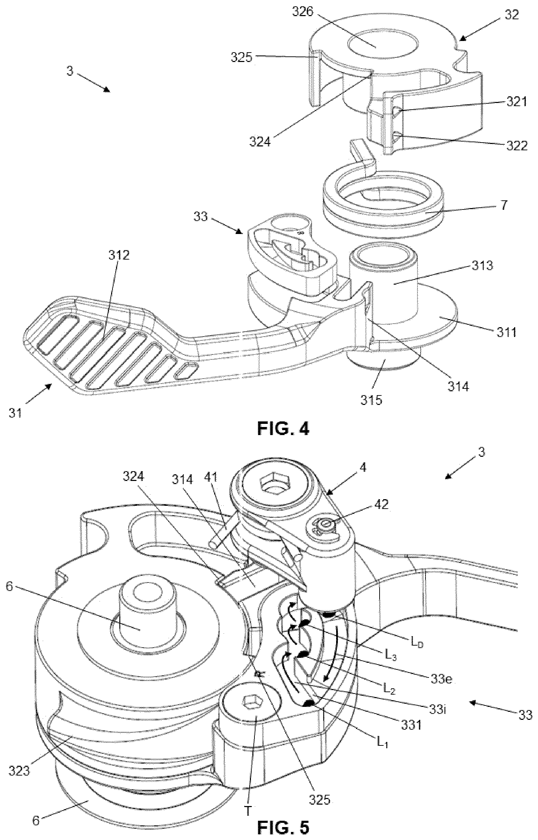

This configuration generates a number of stable locations. Specifically, a first stable location (L₁) is found at the connection point between the outer section (33e) and the inner section (33i) located below according to Fig. 5. A second stable location (L₂) is situated at the first of the two sharp curves of the inner section (33i). A third stable location (L₃) is situated at the second of the two sharp curves of the inner section (33i). As disclosed in detail further down herein, when the cyclist pushes the lever (312), the pin (42) moves from the first stable location (L₁) to the second stable location (L₂), and then from the second stable location (L₂) to the third stable location (L₃).

In addition to these stable locations, the closed track (33) comprises an unlocking location (L_{D}) situated at the connection point between the outer section (33e) and the inner section (33i) situated above according to Fig. 5. To arrive at the unlocking location (L_{D}), the cyclist must push the lever (312) again a third time. However, this location (L_{D}) is not stable but, when the pin (42) arrives at this location (L_{D}), the traction exerted by the cables connected to the shock absorbers (AT, AD), when the first lever unit (3) rotates, causes the pin (42) to move along the outer section (33e) of the track (33) for returning to the first stable location (L₁).

Note that, to prevent the pin (42) from leaving the first stable location (L₁) through the outer section (33e) of the track (33), said outer section (33e) has an ascending inclination from the unlocking location (L_{D}) towards said first stable location (L₁). This causes a step (331) to appear next to said first stable location (L₁) that prevents the pin (42) from moving towards the outer section (33e).

### Second lever unit

As mentioned earlier, the second lever unit (5) controls the configuration of the telescopic seatpost (TT). The second lever unit (5) has a similar configuration as the first lever unit (3), although simpler.

The second lever unit (5) is mainly formed by a lever (51) emerging from a central body (52). The central body (52) has a cylindrical orifice (521) into which a second cylindrical projection (315) of the first lever body (31) fits. Although in the exploded view of Fig. 3 it is not included, a bearing is provided between the cylindrical projection (315) and the cylindrical orifice (521) for enabling the second lever unit (5) to rotate with respect to the lever body (31). This second cylindrical projection (315) projects longitudinally at a side opposite the first cylindrical projection (313) disclosed earlier, into which the floating pulley (32) fits. In short, with this configuration, the second lever unit (5) can rotate with respect to the first lever unit (3).

In a similar manner as the first lever unit (4), the angular amplitude of the rotation of the second lever unit (5) is limited. Thereto, an outer cylindrical surface of the second lever unit (5) comprises a second and third protrusions (53, 54) configured for, in cooperation with the cylindrical stop (23) of the main body (2) disclosed earlier, limiting the angular amplitude of the rotation of the second lever unit (5) with respect to said main body (2).

The second lever unit (5) also has a fixation means (55) for the connection of an end of a cable joined to the regulation element of the telescopic seatpost (TT). Thus, the traction from the cable continuously biases the second lever unit (5) towards one of its end positions delimited by the second protrusion (53). When the cyclist actuates lever (51), making the second lever unit (5) rotate the angle permitted by the separation between said second protrusion (53) and the third protrusion (54), a traction of the cable connected to the regulation element of the telescopic seatpost (TT) is caused that unlocks said seatpost (TT), such that the cyclist can accommodate the seat height as needed. When the cyclist releases the lever (51), the traction of the cable causes the lever unit (5) to rotate back towards the position delimited by the second protrusion (53).

### Main body

The main body (2), in cooperation with the rod (6) disclosed below, is the element serving as a connection between the first and second lever units (3, 5) to conform the shifter (1) of the invention.

The main body (2) is formed by a plate (21) having a relatively flat general configuration from which a guide block (22) having three orifices emerges in an essentially tangential direction with respect to the centre of rotation of the assembly located at the rod (6). These orifices are also oriented essentially in a tangential direction. The cylindrical stop (23) mentioned earlier also emerges from the plate (21), although in this case in an essentially longitudinal direction.

The three orifices of the guide block (22) serve to guide the cables connected to the fixation means (321, 322, 55) along their respective paths towards the shock absorbers (AT, AD) and the telescopic seatpost (TT). On the other hand, the angular amplitude of the cylindrical stop (23) is selected for cooperating with the protrusion (323) of the floating pulley (32) and with the protrusions (53, 54) of the second lever unit (5) to limit the angular amplitude of their respective rotation movements in the manner disclosed below.

The plate (21) also has a longitudinal orifice (211) into which the end of the rod (6) fits. Thus, to assemble the shifter (1) of the invention, the rod (6) is passed through the cylindrical orifice (521) of the second lever unit (5) and through an inner cylindrical cavity of the first and second cylindrical projections (313, 315) of the first lever unit (3). The central cavity (326) of the floating pulley (32) is fitted into the first cylindrical projection (313). And finally, the end of the rod (6) is introduced into the orifice (211) of the plate (21) of the main body (2). The rod (6) thereby makes up the rotation axis around which the first lever unit (3) and the second lever unit (5) rotate.

### Swinging arm

The swinging arm (4) is the element connecting the body (2) with the first lever unit (3) to control the rotation displacement of said first lever unit (3).

The swinging arm (4) has a first end fixed in a rotative manner to the main body (2) through a first helical spring (41). The opposite end of the swinging arm (4) has a locking pin (42) protruding in the longitudinal direction of the shifter (1). A hole (24) in the man body (2) allows the locking pin (42) to enter the closed track (33) of the first lever unit (3). Since, as disclosed earlier, the first lever unit (3) can rotate with respect to the main body (2), this configuration implies that during rotation the locking pin (42) follows the closed track (33) in a predetermined direction, without coming out at any moment.

On the other hand, the first helical spring (41) exerts a torque onto the swinging arm (4) in a predetermined direction. In this example, the position of the first end of the swinging arm (4) causes the general direction of displacement of said first end caused by the rotation of said swinging arm (4) to be approximately tangential with respect to the rotation axis of the different elements making up the shifter (1), the helical spring (41) pushing the swinging arm (4) towards the outside, i.e. radially outwards. Therefore, the locking pin (42), through its movement along the closed track (33), at all times pushes in a radially outward direction. As disclosed in greater detail further down in the present document, this outward tension causes the locking pin (42) to stay at the stable locations (L₁, L₂, L₃) unless the cyclist actuates the first lever unit (3).

Therefore, to each position of the locking pin (42) in the stable locations (L₁, L₂, L₃) corresponds a rotation position (P₁, P₂, P₃) of the first lever unit (3). Similarly, the unlocking location (L_{D}) corresponds to an unlocking position (P_{D}) of the first lever unit (3).

In this context, note that the connection between the locking pin (42) and the end of the swinging arm (4) allows for a longitudinal displacement, and it further includes an elastic means pushing the locking pin (42) in the longitudinal direction towards the bottom of the closed track (33). This ensures that the end of the locking pin (42) is in contact with the bottom of the closed track (33) at all times, which is essential for ensuring that the step (331) of said closed track (33) prevents a displacement of the locking pin (42) in the wrong direction.

### 2. Operation of the shifter of the invention

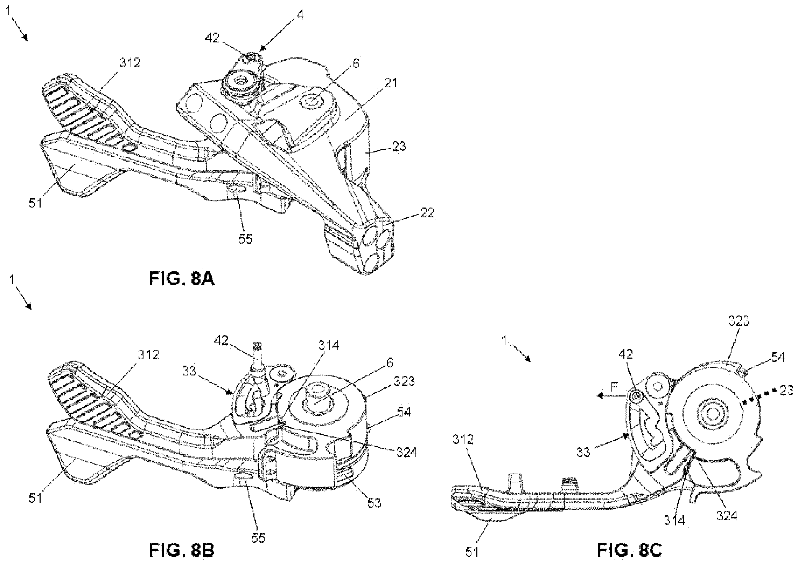

The operation of the shifter (1) making reference to Figs. 8-11 is disclosed now.

### First position (P₁)

Figs 8a-8c show the shifter (1) of this example with the first lever unit (3) in a first position (P₁). The first position (P₁) corresponds to the rest position of the cables connected to the shock absorbers (AD, AT), in which the adjustment knob of said shock absorbers (AD, AT) is in a position corresponding to open valve, and therefore both shock absorbers (AD, AT) are in their soft configuration.

With the lever unit (3) in this position, the locking pin (42) of the swinging arm (4) is situated in the first stable location (L₁) of the closed track (33), that is, at the lower connection point between the inner section (33i) and the outer section (33e) according to the figure. The swinging arm (4), actuated by the first helical spring (41), is applying a force (F) in an essentially radial direction towards the outside, such that the locking pin (42) cannot by itself move along the inner section (33i) of the track (33). On the other hand, step (331) prevents the locking pin (42) from moving along the outer section (33e) of the track (33).

The stop (314) of the first lever unit (3) is in a position adjacent the radial shoulder (324) of the floating pulley (32), as shown in Fig. 5, since the second helical spring (7) forces these two parts to stay at this position.

### Second position (P₂)

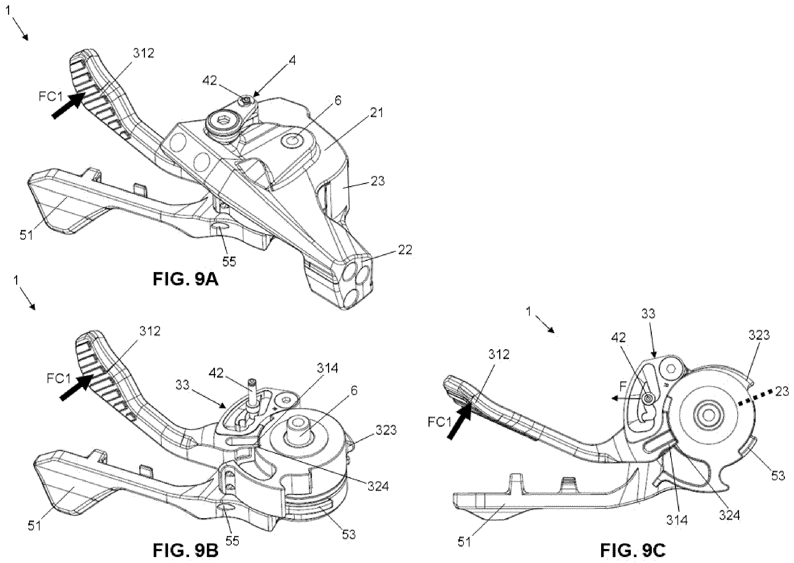

The second position is shown in Figs. 9a-9c. To move to the second position (P₂), the cyclist has exerted a first force (FC1) on the lever (312) that makes the first lever unit (3) to rotate and, upon turning, it moves the closed circuit (33), which in turn causes the locking pin (42) to move along a portion of the inner section (33i) of the track (33) from the first stable location (L₁) towards the second stable location (L₂). In this context, note that the locking pin (42) is connected to an end of the swinging arm (4), the opposite end being fixed to the main body (2). The sharp curve making up the second stable location (L₂) prevents the locking pin (42) from coming out from it biased by the force (F) exerted by the swinging arm (4), which is still oriented essentially radially outwards, that is, towards the closed area of the cavity of the side wall of the track (33) making up the sharp curve in question. That is, in absence of an additional force exerted by the cyclist, the locking pin (42) stays at the second stable location (L₂).

This rotation of the lever unit (3) causes a certain traction magnitude to be exerted on the cables connected to the shock absorbers (AD, AT). This force causes the adjustment knob of said shock absorbers (AD, AT) to rotate an angle, the corresponding valves moving to a semi-open position. The shock absorbers (AD, AT) thereby adopt an intermediate configuration.

During this process, the lever (312), and along with it all of the first lever unit (3) as a whole, has rotated a certain angle given by the distance between the first stable location (L₁) and the second stable location (L₂). The magnitude of the traction applied to the cables will depend on said angle and on the radial position of the fixation means (321, 322). Thus, altering the position of the second stable location (L₂) and the fixation means (321, 322) of the cables the shifter (1) of the invention can be adjusted to the desired rotation movement to be applied to the adjustment knob of the shock absorbers (AD, AT).

Just as before, the lever unit (31) and the floating pulley (32) have rotated together, maintaining the relative position they had in the first position (P₁) thanks to the force the second helical spring (7) exerts onto them both. Therefore, the stop (314) of the first lever unit (3) is still in a position adjacent the radial shoulder (324) of the floating pulley (32).

### Third position (P₃)

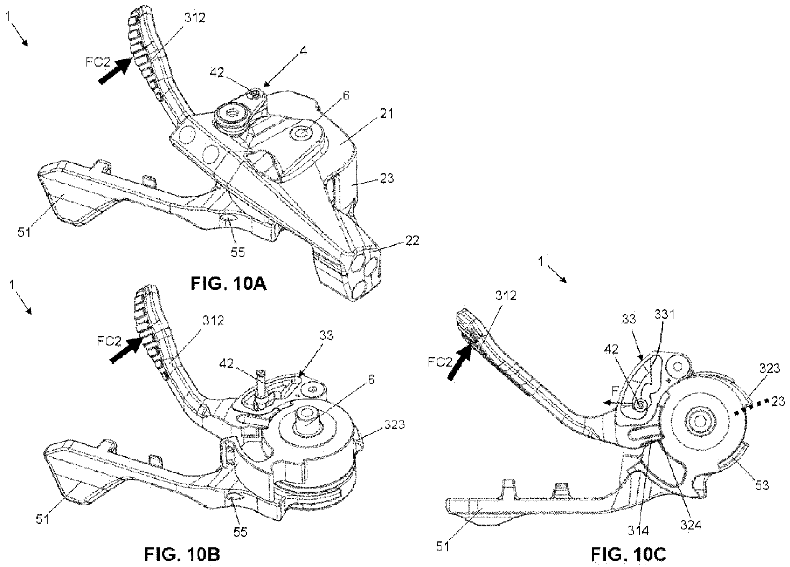

The third position is shown in Figs. 10a-10c. To move towards the third position (P₃), the cyclist has exerted a second force (FC2) onto the lever (312) making the first lever unit (3) to rotate still an additional angle. This rotation again displaces the closed track (33) essentially in the same direction as the previous rotation action, such that the locking pin (42) moves along another portion of the interior section (33i) of the track (33) from the second stable location (L₂) to the third stable location (L₃). The locking pin (42) is therefore positioned at the sharp curve of the inner section (33i) of the track (33) making up the third stable location (L₃), the force exerted by the first helical spring (41) onto the swinging arm (4) pushing said arm (4) against the lateral wall of said sharp curve of the track (33). Again, this position is stable, in the sense that the locking pin (42) cannot escape it unless the cyclist exerts an additional force on the lever (312).

Once again, during this rotation process the lever (312), and with it all of the first lever unit (3) as a whole, has rotated a predetermined angle given by the distance between the second stable location (L₂) and the third stable location (L₃). The magnitude of the traction applied depends on the same parameters mentioned earlier, and in this case, it is adjusted for the cables to act on the corresponding adjustment knobs of the shock absorbers (AD, AT) to close the corresponding valves. With the valves closed, the shock absorbers (AD, AT) are blocked, that is, in their hard position. It is relevant to mention that, to arrive at this position, the adjustment knobs of the shock absorbers (AD, AT) have reached the end of their rotational trajectory, and to prevent damage it is not convenient to force them by additional pulls of the cables.

Still once again, the lever unit (31) and the floating pulley (32) have rotated together, maintaining the same relative position they had in the first position (P₁) and the second position (P₂) thanks to the force the second helical spring (7) exerts onto both. In consequence, the stop (314) of the first lever unit (3) is still in a position adjacent the radial shoulder (324) of the floating pulley (32).

However, the floating pulley (32) has now reached the end of its trajectory, since the protrusion (323) is now in a position adjacent the cylindrical stop (23) of the main body (2). The position of the cylindrical stop (23) is shown in Figs. 8c, 9c, 10c and 11c in a schematic manner by means of a discontinuous line. This shows how the protrusion (323) moves freely between positions (P₁) and (P₂) and between positions (P₂) and (P₃), until in position (P₃) it abuts against said stop (23).

### Unlocking position (P_{D})

In the previous step, the locking pin (42) was positioned at the third stable location (L₃). To escape this position and arrive again at the first stable location (L₁), the locking pin (42) must reach the connection point between the inner section (33i) and the outer section (33e), referred to herein as unlocking location (L_{D}), and thereafter ascent the ramp along the outer section (33e) until dropping down at step (331) to finally arrive at said first stable location (L₁).

Therefore, for the locking pin (42) to arrive at the unlocking location (L_{D}), it is necessary for the cyclist to push the lever (312) still further by exerting a third force (FC3), causing it to rotate yet a small additional angle. In absence of a mechanism preventing it, the rotation of this small additional angle would also imply an additional traction onto the cables connected to the adjustment knobs of the shock absorbers (AD, AT). However, as mentioned earlier, the elements for adjusting the hardness of the shock absorbers (AD, AT) when the shifter is at the third position (P₃) are already at the end of their rotational path, such that this small additional traction could cause them damage.

To prevent this, the first lever unit (3) comprises the two aforementioned parts, specifically the lever body (31) and the floating pulley (32). Thus, when the cyclist exerts this additional force (FC3), the lever body (31) rotates the mentioned small angle, thus causing the locking pin (42) to move from the third stable location (L₃) to the unlocking location (L_{D}). However, the locking pulley (32) cannot follow the lever body (31) along this rotation motion since, as also mentioned earlier, the protrusion (323) of the floating pulley (32) abuts against the cylindrical stop (23) of the main body (2). The additional force (FC3) exerted by the cyclist, thus, surpasses the preload force of the second helical spring (7) and, consequently, the lever body (31) angularly separates from the floating pulley (32), rotating the angle needed for the locking pin (42) to arrive at the unlocking position (P_{D}).

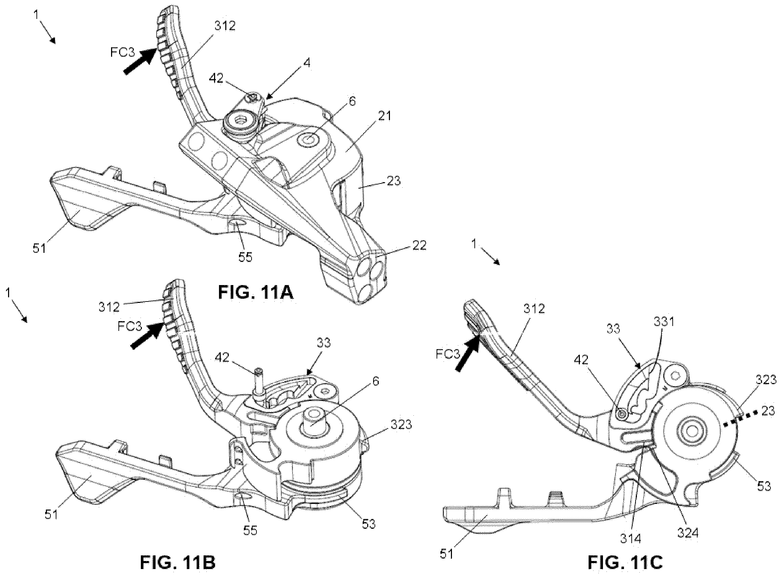

Fig. 11c shows how, unlike what happened along the previous steps of the process for passing between positions (P₁->P₂->P₃), the stop (314) of the first lever unit (3) is no longer adjacent the radial shoulder (324) of the floating pulley (32).

Therefore, since the floating pulley (32) does not rotate in this process and the fixation means (321, 322) to which the cables connected to the shock absorbers (AD, AT) are fixed are located at the floating pulley (32) itself, the movement from the third position (P₃) to the unlocking position (P_{D}) does not imply any additional traction on the cables. Causing damage to the adjustment knobs of the shock absorbers (AD, AT) is thereby prevented.

Once arrived at the unlocking position (P_{D}), the force exerted by the first helical spring (41) forces the locking pin (42) to move from the beginning of the outer section (33e) of the closed track (33). Starting from this position, and since the cables connected to the shock absorbers (AD, AT) exert a continuous traction force (FT) onto the first lever unit (3), the first lever unit (3) as a whole tends to return to the first position (P₁). At the beginning of this trajectory only the lever body (31) rotates the small angle needed to return to its natural rest position where the stop (314) of the first lever unit (3) returns to the position adjacent the radial shoulder (324) of the floating pulley (32). The first lever unit (3) then continues rotating as a single assembly until the locking pin (42) drops down step (331) to arrive at the first stable location (L₁) again.

## Claims

1. Shifter (1) for controlling the front and rear shock absorbers of a bicycle (B) with a single lever, **characterized by** comprising:
- a main body (2) configured for fixation to the handlebar (MLL) of the bicycle (B); and
- a first lever unit (3) connected in a rotating manner to the main body (2), where the first lever unit (3) comprises first fixation means (321, 322) for two cables configured for connection respectively to the front shock absorber (AD) and the rear shock absorber (AT) of the bicycle,
such that, when the main body (2) is fixed to the handlebar (MLL) and the cables connected to the front (AD) and rear (AT) shock absorbers are fixed to the first fixation means (321, 322), the rotation of the first lever unit (3) causes a traction onto said cables that simultaneously modifies the configuration of the front shock absorber (AD) and the rear shock absorber (AT) of the bicycle,
where the connection between the first lever unit (3) and the main body (2) is configured such that said first lever unit (3), upon receiving a first pulsation by the cyclist, rotates in a first direction from a first position (P₁) to a second position (P₂) that is angularly separated from the first position (P₁), and upon receiving a second pulsation from the cyclist said first lever unit (3) rotates in the first direction from the second position (P₂) to a third position (P₃) that is angularly separated from the second position (P₂),
**characterized in that** the connection between the first lever unit (3) and the main body (2) is also configured such that said first lever unit (3), upon receiving a third pulsation from the cyclist, rotates in the first direction from the third position (P₃) to an unlocking position (P_{D}) and, thereafter, automatically rotates in a second direction opposite the first for returning to the first position (P₁).

2. Shifter (1) according to claim 1, further comprising a swinging arm (4) having a first end fixed in a rotating manner to the main body (2) and continuously biased by a first helical spring (41)
and where the first lever unit (3) further comprises a closed track (33) where a locking pin (42) provided at a second end of the swinging arm (4) is introduced,
the closed track (33) having three stable locations (L₁, L₂, L₃) respectively corresponding to the first (P₁), second (P₂) and third (P₃) positions of the first lever unit (3), and an unlocking location (L_{D}) situated between the third stable location (L₃) and the first stable location (L₁) that corresponds to an unlocking position (P_{D}) of the first lever unit (3),
such that:
- at the first position (P₁) of the lever unit (3) the locking pin (41) is in the first stable location (L₁),
- at the second position (P₂) of the lever unit (3) the locking pin (41) is in the second stable location (L₁),
- at the third position (P₃) of the lever unit (3) the locking pin (41) is in the third stable location (L₃), and
- in the unlocking position (P_{D}) of the lever unit (3) the locking pin (41) is in the unlocking location (L_{D}), from which a traction of the cables connected to the front (AD) and rear (AT) shock absorbers causes the lever unit (3) to return to the first position (P₁) and, correspondingly, the locking pin (41) to the first stable location (L₁).

3. Shifter (1) according to claim 2, where the closed track (33) comprises a radially inner section (33i) and a radially outer section (33e), where the radially inner section (33i) has a zigzag configuration having two sharp curves where the second stable location (L₂) and the third stable location (L₃) are provided, and the radially outer section (33e) has a configuration having a substantially uniform curvature, where the first stable location (L₁) is provided at a first connection point between both sections (33i, 33e) and the unlocking location (LD) is provided at a second connection point between both sections (33i, 33e).

4. Shifter (1) according to claim 3, where a bottom of said closed track (33) comprises a step (331) provided at the first connection point between both sections (33i, 33e) and the locking pin (42) is connected to the swinging arm (4) in an axially sliding manner and continuously biased towards the bottom of said closed track (33), the step (331) preventing the locking pin (42), when in the first stable location (L₁), to move along the radially outer section (33e) towards the third stable location (L₃), such that the first lever unit (4) cannot pass from the first position (P₁) to the third position (P₃) without passing through the second (P₂) and third (P₃) positions.

5. Shifter (1) according to any of claims 3-4, where the first lever unit (3) comprises a lever body (31) and a floating pulley (32) connected in a rotative manner through a second helical spring (7),
where the first fixation means (321, 322) of the cables are provided at the floating pulley (32),
and where the floating pulley (32) comprises a first protrusion (323) abutting against the main body (2) when the first lever unit (3) is at the third position (P₃) corresponding to a situation where the locking pin (42) is placed at the third location (L₃) of the closed track (33),
such that, when the first lever unit (3) leaves the third position (P₃) towards the unlocking position (P_{D}), the first protrusion (323) prevents the floating pulley (32) from rotating with respect to the main body (2), but the lever body (31) rotates with respect to said floating pulley (32) surpassing the force of the second helical spring (7), such that the locking pin (42) moves from the third stable location (L₃) to the unlocking location (L_{D}) and, subjected to the traction of the cables connected to the front (AD) and rear (AT) shock absorbers, then moves along the outer section (33e) of the closed track (33) until arriving at the first stable location (L₁).

6. Shifter (1) according to claim 5, where the first protrusion (323) is placed at a first portion of an outer cylindrical surface of the floating pulley (32), said first protrusion (323) abutting against a cylindrical stop (23) of the main body.

7. Shifter (1) according to any of claims 5-6, where a second portion of the cylindrical outer surface of the floating pulley (32) comprises a radial shoulder (324) configured to cooperate with a stop element (314) of the lever body (31) for limiting the angular amplitude of the rotation of the lever body (31) with respect to said floating pulley (32).

8. Shifter (1) according to any of the previous claims, where the first fixation means (321, 322) are orifices made in the floating pulley (32).

9. Shifter (1) according to any of the previous claims, further comprising a second lever unit (5) rotatively connected to the main body (2), where said second lever unit (5) comprises a second fixation means (55) for a cable configured for connection to a telescopic seatpost (TT).

10. Shifter (1) according to claim 9, where the second fixation means (55) is an orifice made in the second lever unit (5).

11. Shifter (1) according to any of claims 9-10, where an outer cylindrical surface of the second lever unit (5) comprises second and third protrusions (53, 54) configured for, in cooperation with the cylindrical section (21) of the main body (2), limit the angular amplitude of the rotation of the second lever unit (5) with respect to said main body (2).

12. System for controlling the front and rear shock absorbers of a bicycle using a single lever, **characterized by** comprising:
- a shifter (1) according to any of the previous claims whose main body (2) is fixed to the handlebar (MLL) of the bicycle (B);
- a front shock absorber (AD) connecting a front axle (ED) of the bicycle (B) with the frame (C); and
- a rear shock absorber (AT) connecting a rear axle (ET) of the bicycle (B) with the frame (C); and
- two cables having an end connected to the first fixation means (321, 322) of the shifter (1) and another end connected respectively to a control element of the front shock absorber (AD) and the rear shock absorber (AT).

13. System according to claim 12, further comprising a further cable having an end connected to the second fixation means (51) of the second lever unit (5) of the shifter (1) and another end connected to a control element of the telescopic seatpost (TT), such that the rotation of the second lever unit (5) with respect to the main body (2) of the shifter (1) causes a traction on said cable actuating said control element to modify the height of the telescopic seatpost (TT).

## Patentansprüche

1. Schalthebel (1) zur Steuerung der vorderen und hinteren Stoßdämpfer eines Fahrrads (B) mit einem einzigen Hebel, **dadurch gekennzeichnet, dass** dieser Folgendes umfasst:
- einen Hauptkörper (2), der für die Befestigung an der Lenkstange (MLL) des Fahrrads (B) konfiguriert ist; und
- eine erste Hebeleinheit (3), die drehbar mit dem Hauptkörper (2) verbunden ist, wobei die erste Hebeleinheit (3) erste Befestigungsmittel (321, 322) für zwei Kabel umfasst, die für die Verbindung mit dem vorderen Stoßdämpfer (AD) bzw. dem hinteren Stoßdämpfer (AT) des Fahrrads konfiguriert sind,
so dass, wenn der Hauptkörper (2) an der Lenkstange (MLL) befestigt ist und die mit dem vorderen (AD) und dem hinteren (AT) Stoßdämpfer verbundenen Kabel an den ersten Befestigungsmitteln (321, 322) befestigt sind, die Drehung der ersten Hebeleinheit (3) einen Zug an den Kabeln bewirkt, der gleichzeitig die Konfiguration des vorderen Stoßdämpfers (AD) und des hinteren Stoßdämpfers (AT) des Fahrrads verändert,
wobei die Verbindung zwischen der ersten Hebeleinheit (3) und dem Hauptkörper (2) so konfiguriert ist, dass sich die erste Hebeleinheit (3) bei Empfang eines ersten Impulses durch den Radfahrer in einer ersten Richtung von einer ersten Position (P₁) zu einer zweiten Position (P₂) dreht, die von der ersten Position (P₁) winkelmäßig getrennt ist, und sich die erste Hebeleinheit (3) bei Empfang eines zweiten Impulses durch den Radfahrer in der ersten Richtung von der zweiten Position (P₂) zu einer dritten Position (P₃) dreht, die von der zweiten Position (P₂) winkelmäßig getrennt ist,
**dadurch gekennzeichnet, dass** die Verbindung zwischen der ersten Hebeleinheit (3) und dem Hauptkörper (2) auch so konfiguriert ist, dass die erste Hebeleinheit (3) bei Empfang eines dritten Impulses von dem Radfahrer in der ersten Richtung aus der dritten Position (P₃) in eine Entriegelungsposition (P_{D}) rotiert und sich danach automatisch in einer zweiten Richtung entgegengesetzt zur ersten dreht, um in die erste Position (P₁) zurückzukehren.

2. Schalthebel (1) nach Anspruch 1, der ferner einen Schwenkarm (4) umfasst, dessen erstes Ende drehbar an dem Hauptkörper (2) befestigt ist und der kontinuierlich durch eine erste Schraubenfeder (41) vorgespannt ist,
und wobei die erste Hebeleinheit (3) ferner eine geschlossene Bahn (33) umfasst, in die ein Sperrstift (42) eingeführt ist, der an einem zweiten Ende des Schwenkarms (4) vorgesehen ist,
wobei die geschlossene Bahn (33) drei stabile Lagen (L₁, L₂, L₃) aufweist, die jeweils der ersten (P₁), der zweiten (P₂) und der dritten (P₃) Position der ersten Hebeleinheit (3) entsprechen, und eine Entriegelungslage (L_{D}), die zwischen der dritten stabilen Lage (L₃) und der ersten stabilen Lage (L₁) angeordnet ist und einer Entriegelungsposition (P_{D}) der ersten Hebeleinheit (3) entspricht, so dass:
- in der ersten Position (P₁) der Hebeleinheit (3) sich der Sperrstift (41) in der ersten stabilen Lage (L₁) befindet,
- in der zweiten Position (P₂) der Hebeleinheit (3) sich der Sperrstift (41) in der zweiten stabilen Lage (L₁) befindet,
- in der dritten Position (P₃) der Hebeleinheit (3) sich der Sperrstift (41) in der dritten stabilen Lage (L₃) befindet, und
- in der Entriegelungsposition (P_{D}) der Hebeleinheit (3) sich der Sperrstift (41) in der Entriegelungslage (L_{D}) befindet, aus der ein Zug der mit den vorderen (AD) und hinteren (AT) Stoßdämpfern verbundenen Kabel die Hebeleinheit (3) in die erste Position (P₁) und dementsprechend den Sperrstift (41) in die erste stabile Lage (L₁) zurückkehren lässt.

3. Schalthebel (1) nach Anspruch 2, wobei die geschlossene Bahn (33) einen radial inneren Abschnitt (33i) und einen radial äußeren Abschnitt (33e) umfasst, wobei der radial innere Abschnitt (33i) eine Zickzack-Konfiguration mit zwei scharfen Kurven aufweist, in denen die zweite stabile Lage (L₂) und die dritte stabile Lage (L₃) vorgesehen sind, und der radial äußere Abschnitt (33e) eine Konfiguration mit einer im Wesentlichen gleichmäßigen Krümmung aufweist, wobei die erste stabile Lage (L₁) an einem ersten Verbindungspunkt zwischen beiden Abschnitten (33i, 33e) vorgesehen ist und die Entriegelungslage (L_{D}) an einem zweiten Verbindungspunkt zwischen beiden Abschnitten (33i, 33e) vorgesehen ist.

4. Schalthebel (1) nach Anspruch 3, wobei ein Boden der geschlossenen Bahn (33) eine Stufe (331) umfasst, die an dem ersten Verbindungspunkt zwischen den beiden Abschnitten (33i, 33e) vorgesehen ist, und der Sperrstift (42) mit dem Schwenkarm (4) axial gleitend verbunden und kontinuierlich in Richtung des Bodens der geschlossenen Bahn (33) vorgespannt ist, wobei die Stufe (331) verhindert, dass sich der Sperrstift (42), wenn er sich in der ersten stabilen Lage (L₁) befindet, entlang des radial äußeren Abschnitts (33e) in Richtung der dritten stabilen Lage (L₃) bewegt, so dass die erste Hebeleinheit (4) nicht von der ersten Position (P₁) in die dritte Position (P₃) gelangen kann, ohne die zweite (P₂) und die dritte (P₃) Position zu passieren.

5. Schalthebel (1) nach einem der Ansprüche 3 bis 4, wobei die erste Hebeleinheit (3) einen Hebelkörper (31) und eine schwimmende Rolle (32) umfasst, die über eine zweite Schraubenfeder (7) drehbar verbunden sind,
wobei die ersten Befestigungsmittel (321, 322) der Kabel an der schwimmenden Rolle (32) vorgesehen sind,
und wobei die schwimmende Rolle (32) einen ersten Vorsprung (323) umfasst, der gegen den Hauptkörper (2) stößt, wenn sich die erste Hebeleinheit (3) in der dritten Position (P₃) befindet, entsprechend einer Situation, in der der Sperrstift (42) an der dritten Lage (L₃) der geschlossenen Bahn (33) angeordnet ist,
so dass, wenn die erste Hebeleinheit (3) die dritte Position (P₃) in Richtung der Entriegelungsposition (P_{D}) verlässt, der erste Vorsprung (323) die schwimmende Rolle (32) daran hindert, sich in Bezug auf den Hauptkörper (2) zu drehen, aber der Hebelkörper (31) sich in Bezug auf die schwimmende Scheibe (32) dreht und dabei die Kraft der zweiten Schraubenfeder (7) übersteigt, so dass sich der Sperrstift (42) von der dritten stabilen Lage (L₃) in die Entriegelungslage (L_{D}) bewegt und sich dann unter dem Zug der Kabel, die mit den vorderen (AD) und hinteren (AT) Stoßdämpfern verbunden sind, entlang des äußeren Abschnitts (33e) der geschlossenen Bahn (33) bewegt, bis er die erste stabile Lage (L₁) erreicht.

6. Schalthebel (1) nach Anspruch 5, wobei der erste Vorsprung (323) an einem ersten Teil einer zylindrischen Außenfläche der schwimmenden Rolle (32) angeordnet ist, wobei der erste Vorsprung (323) gegen einen zylindrischen Anschlag (23) des Hauptkörpers stößt.

7. Schalthebel (1) nach einem der Ansprüche 5 bis 6, wobei ein zweiter Teil der zylindrischen Außenfläche der schwimmenden Rolle (32) eine radiale Schulter (324) umfasst, die so konfiguriert ist, dass sie mit einem Anschlagelement (314) des Hebelkörpers (31) zusammenwirkt, um die Winkelamplitude der Drehung des Hebelkörpers (31) in Bezug auf die schwimmende Rolle (32) zu begrenzen.

8. Schalthebel (1) nach einem der vorhergehenden Ansprüche, wobei die ersten Befestigungsmittel (321, 322) in der schwimmenden Rolle (32) ausgebildete Öffnungen sind.

9. Schalthebel (1) nach einem der vorhergehenden Ansprüche, der ferner eine zweite Hebeleinheit (5) umfasst, die drehbar mit dem Hauptkörper (2) verbunden ist, wobei die zweite Hebeleinheit (5) ein zweites Befestigungsmittel (55) für ein Kabel umfasst, das zur Verbindung mit einer Teleskopsattelstütze (TT) konfiguriert ist.

10. Schalthebel (1) nach Anspruch 9, wobei das zweite Befestigungsmittel (55) eine in der zweiten Hebeleinheit (5) ausgebildete Öffnung ist.

11. Schalthebel (1) nach einem der Ansprüche 9 bis 10, wobei eine zylindrische Außenfläche der zweiten Hebeleinheit (5) zweite und dritte Vorsprünge (53, 54) umfasst, die so konfiguriert sind, dass sie im Zusammenwirken mit dem zylindrischen Abschnitt (21) des Hauptkörpers (2) die Winkelamplitude der Drehung der zweiten Hebeleinheit (5) in Bezug auf den Hauptkörper (2) begrenzen.

12. System zur Steuerung der vorderen und hinteren Stoßdämpfer eines Fahrrads unter Verwendung eines einzigen Hebels, **dadurch gekennzeichnet, dass** es Folgendes umfasst:
- einen Schalthebel (1) nach einem der vorhergehenden Ansprüche, dessen Hauptkörper (2) an der Lenkstange (MLL) des Fahrrads (B) befestigt ist;
- einen vorderen Stoßdämpfer (AD), der eine Vorderachse (ED) des Fahrrads (B) mit dem Rahmen (C) verbindet; und
- einen hinteren Stoßdämpfer (AT), der eine Hinterachse (ET) des Fahrrads (B) mit dem Rahmen (C) verbindet; und
- zwei Kabel, deren eines Ende mit dem ersten Befestigungsmittel (321, 322) des Schalthebels (1) verbunden ist und deren anderes Ende jeweils mit einem Steuerelement des vorderen Stoßdämpfers (AD) und des hinteren Stoßdämpfers (AT) verbunden ist.

13. System nach Anspruch 12, das ferner ein weiteres Kabel umfasst, dessen eines Ende mit dem zweiten Befestigungsmittel (51) der zweiten Hebeleinheit (5) des Schalthebels (1) verbunden ist und dessen anderes Ende mit einem Steuerelement der Teleskopsattelstütze (TT) verbunden ist, so dass die Drehung der zweiten Hebeleinheit (5) in Bezug auf den Hauptkörper (2) des Schalthebels (1) einen Zug an dem Kabel bewirkt, der das Steuerelement betätigt, um die Höhe der Teleskopsattelstütze (TT) zu verändern.

## Revendications

1. Levier de vitesse (1) pour commander les amortisseurs avant et arrière d'un vélo (B) à levier unique, **caractérisé en ce qu'**elle comprend :
- un corps principal (2) configuré pour être fixé au guidon (MLL) du vélo (B) ; et
- une première unité de levier (3) connectée en rotation au corps principal (2) où la première unité de levier (3) comprend les premiers moyens de fixation (321, 322) pour deux câbles configurés pour être connectés respectivement à l'amortisseur avant (AD) et à l'amortisseur arrière (AT) du vélo,
de telle sorte que lorsque le corps principal (2) est fixé au guidon (MLL) et que les câbles connectés aux amortisseurs avant (AD) et arrière (AT) sont fixés sur les premiers moyens de fixation (321, 322), la rotation de la première unité de levier (3) entraîne une force de traction sur lesdits câbles qui modifie simultanément la configuration de l'amortisseur avant (AD) et de l'amortisseur arrière (AT) du vélo,
où la connexion entre la première unité de levier (3) et le corps principal (2) est configurée de telle sorte que ladite première unité de levier (3), après avoir reçu la première pulsation du cycliste, tourne dans une première direction à partir d'une première position (P1) vers une deuxième position (P2) qui est séparée par un angle de la première position (P1) ; lorsqu'elle reçoit la deuxième pulsation du cycliste, ladite première unité de levier (3) tourne dans la première direction en partant de la deuxième position (P2) pour atteindre une troisième position (P3) qui est séparée par un angle de la deuxième position (P2),
**caractérisée en ce que** la connexion entre la première unité de levier (3) et le corps principal (2) est également configuré de telle sorte que ladite première unité (3), lorsqu'elle reçoit une troisième pulsation du cycliste, tourne dans la première direction en partant de la troisième position (P3) vers une position de déblocage (PD) puis tourne automatiquement dans une deuxième direction opposée à la première pour revenir à la première position (P1).

2. Levier de vitesse (1) conformément à la revendication 1, comprenant également un bras oscillant (4) comportant une première extrémité fixée en rotation au corps principal (2) et sollicitée en continu par un premier ressort hélicoïdal (41).
et où la première unité de levier (3) comprend également une piste fermée (33) où un ergot de verrouillage (42) disposé sur la seconde extrémité du bras oscillant (4) est introduit,
la piste fermée (33) ayant trois emplacements stables (L1, L2, L3) respectivement correspondant à la première (P1), la deuxième (P2) et la troisième (P3) position de la première unité de levier (3), et une position de déverrouillage (LD) située entre le troisième emplacement stable (L3) et le premier emplacement stable (L1) qui correspond à une position de déverrouillage (PD) de la première unité de levier (3),
de sorte que :
- sur la première position (P1) de l'unité de levier (3) l'ergot de verrouillage (41) est dans le premier emplacement stable (L1),
- sur la deuxième position (P2) de l'unité de levier (3) l'ergot de verrouillage (41) est dans le deuxième emplacement stable (L1),
- sur la troisième position (P3) de l'unité de levier (3) l'ergot de verrouillage (41) est dans le troisième emplacement stable (L3),
- et dans la position de déverrouillage (PD) de l'unité de levier (3), l'ergot de verrouillage (41) est dans l'emplacement de déverrouillage (LD), à partir duquel une traction sur les câbles reliés aux amortisseurs avant (AD) et arrière (AT) entraîner le retour de l'unité de levier (3) vers la première position (P1) et, de la même manière, l'ergot de verrouillage (41) vers le premier emplacement stable (L1).

3. Levier de vitesse (1), conformément à la revendication 2, où la piste fermée (33) comprend une section radialement interne (33i) et une section radialement externe (33e) où la section radialement interne (33i) a une configuration en zigzag avec deux courbes prononcées où le deuxième emplacement stable (L2) et le troisième emplacement stable (L3) sont prévus, et la section radialement externe (33e) a une configuration avec une courbature sensiblement uniforme, où le premier emplacement stable (L1) est prévu sur le premier point de connexion entre les deux sections (33i, 33e) et l'emplacement de déverrouillage (LD) est prévu sur un deuxième point de connexion entre les deux sections (33i, 33e).

4. Levier de vitesse (1) conformément à la revendication 3, où une extrémité de ladite piste fermée (33) comprend un décrochement (331) prévu sur le premier point de connexion entre les deux sections (33i, 33e) et l'ergot de verrouillage (42) est connecté au bras oscillant (4) de manière axialement coulissante et sollicité en continu vers le fond de ladite piste fermée (33), le décrochement (331) empêchant l'ergot de verrouillage (42), lorsqu'il se trouve dans le premier emplacement stable (L1) de se déplacer le long de la section radialement externe (33e) vers le troisième emplacement stable (L3), de sorte que la première unité de levier (4) ne peut pas passer de la première position (P1) à la troisième position (P3) sans passer par les deuxième (P2) et troisième (P3) positions.

5. Levier de vitesse (1), conformément à l'une quelconque des revendications 3-4, où la première unité de levier (3) comprend un corps de levier (31) et une poulie flottante (32) reliés de manière rotative par un second ressort hélicoïdal (7), où les premiers moyens de fixation (321, 322) des câbles sont prévus au niveau de la poulie flottante (32),
et où la poulie flottante (32) comprend une première saillie (323) venant en butée contre le corps principal (2) lorsque la première unité de levier (3) est sur la troisième position (P3) correspondant à une situation où l'ergot de verrouillage (42) est placé sur le troisième emplacement (L3) de la piste fermée (33),
de sorte que lorsque la première unité de levier (3) quitte la troisième position (P3) vers la position de déverrouillage (PD), la première saille (323) empêche la poulie flottante (32) de tourner par rapport au corps principal (2) mais le corps de levier (31) tourne par rapport à ladite poulie flottante (32) en surpassant la force du second ressort hélicoïdal (7), de sorte que l'ergot de verrouillage (42) se déplace du troisième emplacement stable (L3) vers l'emplacement de déverrouillage (LD) et, soumis à la traction des câbles reliés aux amortisseurs avant (AD) et arrière (AT), se déplace ensuite le long de la section externe (33e) de la piste fermée (33) jusqu'à arriver au premier emplacement stable (L1).

6. Levier de vitesse (1) conformément à la revendication 5, où la première saillie (323) est placée au niveau d'une première partie d'une surface cylindrique externe de la poulie flottante (32), ladite première saillie (323) venant en butée contre une butée cylindrique (23) du corps principal.

7. Levier de vitesse (1), conformément à l'un quelconque des revendications 5-6, où une seconde partie de la surface cylindrique externe de la poulie flottante (32) comprend un épaulement radial (324) configuré pour coopérer avec un élément d'arrêt (214) du corps de levier (31) pour limiter l'amplitude angulaire de la rotation du corps de levier (31) par rapport à ladite poulie flottante (32).

8. Levier de vitesse (1), conformément à l'une quelconque des revendications précédentes, où les premiers moyens de fixation (321, 322) sont des orifices aménagés dans la poulie flottante (32).

9. Levier de vitesse (1) selon l'une quelconque des revendications précédentes, comprenant en outre une seconde unité de levier (5) reliée de manière rotative au corps principal (2) où ladite seconde unité de lever (5) comprend un second moyen de fixation (55) pour un câble configuré pour être relié à une tige de selle télescopique (TT).

10. Levier de vitesse (1), conformément à la revendication 9, où le second moyen de fixation (55) est un orifice aménagé dans la seconde unité de levier (5).

11. Levier de vitesse (1), conformément à l'une quelconque des revendications 9-10, où une surface cylindrique externe de la seconde unité de levier (5) comprend des deuxième et troisième saillies (53, 54) configurées pour, en coopération avec la section cylindrique (21) du corps principal (2), limiter l'amplitude angulaire de la rotation de la seconde unité de levier (5) par rapport audit corps principal (2).

12. Système pour commander les amortisseurs avant et arrière d'un vélo à levier unique, **caractérisé en ce qu'**elle comprend :
- une levier de vitesse (1) conformément à l'une quelconque des revendications précédentes dont le corps principal (2) est fixé au guidon (MLL) du vélo (B) ;
- un amortisseur avant (AD) reliant un essieu avant (ED) du vélo (B) au cadre (C) ; et
- un amortisseur arrière (AT) reliant un essieu arrière (ET) du vélo (B) au cadre (C) ; et
- deux câbles ayant une extrémité reliée aux premiers moyens de fixation (321, 322) de la levier de vitesse (1) et une autre extrémité reliée respectivement à un élément de commande de l'amortisseur avant (AD) et de l'amortisseur arrière (AT).

13. Système conformément à la revendication 12, comprenant en outre un câble supplémentaire ayant une extrémité reliée au second moyen de fixation (51) de la seconde unité de levier (5) de la levier de vitesse (1) et une autre extrémité reliée à un élément de commande de la tige de selle télescopique (TT), de sorte que la rotation de la seconde unité de levier (5) par rapport au corps principal (2) de la levier de vitesse (1) provoque une traction sur ledit câble actionnant ledit élément de commande pour modifier la hauteur de la tige de selle télescopique (TT).
